# FASCICULE DE BREVET EUROPEEN

(11) **EP 4 158 217 B1**
(45) Date de publication et mention de la délivrance du brevet: **23.10.2024**
(21) Numéro de dépôt: 21722969.9
(22) Date de dépôt: 07.04.2021
(51) Int. Cl.: F16D 65/00

(54) **SYSTÈME DE FREINAGE DE VEHICULE**
BREMSSYSTEM EINES FAHRZEUGES
BRAKE SYSTEM OF A VEHICLE

(30) Priorité: 25.05.2020 FR 2005507
(43) Date de publication de la demande: 05.04.2023
(73) Titulaire: Stellantis Auto SAS, 78300 Poissy (FR)
(72) Inventeur: PALPACUER, Eric, 75013 Paris (FR)
(86) Numéro de dépôt international: PCT/FR2021/050609
(87) Numéro de publication internationale: WO 2021/240079

(56) Documents cités:
- EP-A1- 2 309 146
- FR-A1- 3 086 023

## Description

La présente invention revendique la priorité de la demande française N°2005507 déposée le 25.05.2020.

Un aspect de l'invention se rapporte à un système de freinage de véhicule construit et agencé pour collecter des particules émises lors d'un freinage. Un autre aspect de l'invention porte sur un véhicule, notamment automobile, comportant un système de freinage de véhicule construit et agencé pour collecter des particules émises lors d'un freinage.

Les véhicules automobiles comportent des systèmes de freinage comprenant des garnitures équipées de matériaux de friction délivrant une pression sur des disques ou des tambours liés en rotation aux roues du véhicule, afin d'appliquer dessus un couple de freinage.

Les freinages du véhicule entraînent une usure par abrasion des matériaux de friction, ainsi qu'une usure réduite des disques métalliques, qui génèrent des particules dispersées dans l'air ambiant produisant une pollution de cet air. Les normes antipollution imposeront dans le futur des limitations des émissions de particules polluantes venant du freinage.

Un dispositif connu de récupération des particules émises par des freins à disque, présenté notamment par le document EP-A1-2309146 utilise des perçages réalisés sur les garnitures de freins. Ces perçages traversent les garnitures pour conduire les particules émises entre le matériau de friction et une face du disque à une cavité arrière contenant un aimant.

Les particules des matériaux de friction contenant des éléments métalliques, et les particules métalliques des disques, sont attirées par l'aimant disposé à plat au fond de la cavité, parallèlement à la garniture, afin de s'accumuler dans cette cavité formant un réservoir pour éviter une dispersion dans l'air. Lors d'un entretien du véhicule, on dépose le réservoir pour vider les particules.

Toutefois, l'aimant disposé à plat au fond du réservoir, se couvre progressivement de particules. Comme il se trouve relativement loin de la face avant de la garniture en appui sur le disque, son champ magnétique à proximité de la zone d'abrasion est faible.

Ainsi, un certain nombre de particules peuvent se disperser autour des garnitures en se perdant dans l'air. Le rendement de collecte des particules d'un tel dispositif de récupération est par conséquent diminué.

FR 3 086 023 A1 divulgue d'autre part un système de freinage de véhicule construit, comportant un premier aimant, un réservoir externe en regard d'un orifice d'une plaque support de la garniture externe de freinage, ledit réservoir externe débouchant sur ladite plaque support et comportant un deuxième aimant.

Le but de l'invention est de pallier les inconvénients de l'art antérieur en proposant un système de freinage de véhicule construit et agencé pour collecter des particules émises lors d'un freinage dont le rendement de collecte des particules est élevé.

Dans ce contexte, l'invention se rapporte ainsi, dans son acceptation la plus large, à un système de freinage de véhicule comme défini dans la revendication indépendante 1 ci-jointe, construit et agencé pour collecter des particules émises lors d'un freinage, le système de freinage comportant un étrier supportant une garniture interne de freinage et une garniture externe de freinage comportant chacune une plaque support et une couche de friction.

Les garnitures interne et externe de freinage comportent un orifice traversant leur épaisseur, le système de freinage comportant en outre :
- un réservoir interne en regard de l'orifice de la plaque support de la garniture interne de freinage, le réservoir interne débouchant sur la plaque support et comportant un premier aimant,
- un réservoir externe en regard de l'orifice de la plaque support de la garniture externe de freinage, le réservoir externe débouchant sur la plaque support et comportant un deuxième aimant,
- les faces des premier et deuxième aimants en regard desdits orifices étant en relief, et ces-dites faces de l'invention étant définies dans la partie caractérisante de la revendications indépendante 1 ci-jointe.

Ainsi, les faces en relief des premier et deuxième aimants permettent de collecter un maximum de particules émises lors d'un freinage. En effet, ce relief permet de maximiser la surface d'attraction et de collecte des particules. Il s'en suit alors une réduction, voire une suppression, de rejet de particules émises lors d'un freinage dans l'air.

Outre les caractéristiques qui viennent d'être évoquées dans le paragraphe précédent, le système de freinage de véhicule construit et agencé pour collecter des particules émises lors d'un freinage peut présenter une ou plusieurs caractéristiques complémentaires parmi les suivantes, considérées individuellement ou selon toutes les combinaisons techniquement possibles.

Selon un aspect de l'invention, le réservoir interne est ménagé dans un piston du système de freinage.

Selon un aspect de l'invention, au moins une zone de stockage périphérique est ménagée entre la surface interne du réservoir interne ou externe et la surface externe du premier aimant ou deuxième aimant.

Selon un aspect de l'invention, le premier aimant et le deuxième aimant présentent une longueur différente.

Selon un aspect de l'invention, une rainure est ménagée dans au moins une des couches de friction, la rainure débouchant dans l'orifice. Cet orifice est celui de la couche de friction comportant ladite rainure.

Selon un aspect de l'invention, au moins un des premier ou deuxième aimants est au néodyme-fer-bore.

Selon un autre aspect, l'invention porte sur un véhicule comportant deux systèmes de freinage construits et agencés pour collecter des particules émises lors d'un freinage selon l'un quelconque des aspects de l'invention précités.

L'invention et ses différentes applications seront mieux comprises à la lecture de la description qui suit et à l'examen des figures qui l'accompagnent.
[Fig. 1] illustre de façon schématique un système de freinage de véhicule selon un aspect de l'invention.
[Fig. 2] est une vue en coupe du système de freinage selon l'invention représenté à la figure 1.
[Fig. 3] représente de façon schématique un exemple de réalisation d'une garniture de freinage selon un aspect de l'invention.
[Fig. 4a] est une vue de dessous d'un premier exemple de réalisation d'une surface en relief d'un aimant que comporte un système de freinage selon l'invention.
[Fig. 4b] est une vue de face de la surface en relief illustrée à la figure 4a.
[Fig. 5a] est une vue de dessous d'un deuxième exemple de réalisation d'une surface en relief d'un aimant que comporte un système de freinage selon l'invention
[Fig. 5b] est une vue de face de la surface en relief illustrée à la figure 5a.
[Fig. 6] est une vue de dessus d'un troisième exemple de réalisation d'une surface en relief d'un aimant que comporte un système de freinage selon l'invention.
[Fig. 7] est une vue en trois dimensions d'un quatrième exemple de réalisation d'une surface en relief d'un aimant que comporte un système de freinage selon l'invention.

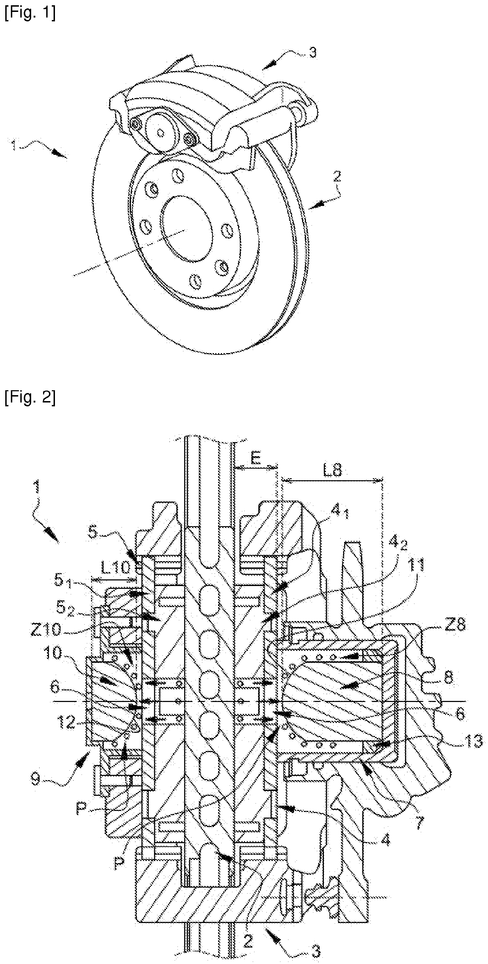

La figure 1 illustre un système de freinage 1 de véhicule selon un aspect de l'invention. Le système de freinage 1 est assemblé sur un disque 2 de frein. Le système de freinage 1 comporte un étrier 3 supportant une garniture interne de freinage et une garniture externe de freinage comportant chacune une plaque support et une couche de friction.

La figure 2 est une vue en coupe du système de freinage 1 représenté à la figure 1.

Le système de freinage 1 comporte un étrier 3. Cet étrier 3 supporte une garniture interne 4 de freinage et une garniture externe 5 de freinage comportant chacune une plaque support 4₁, 5₁ et une couche de friction 4₂, 5₂.

La garniture interne 4 de freinage comporte un orifice 6 traversant l'épaisseur E de la garniture interne 4 et la garniture externe 5 de freinage comporte un orifice 6 traversant l'épaisseur E de la garniture externe 5.

Le système de freinage 1 comporte en outre un réservoir interne 7 en regard de l'orifice 6 et débouchant sur la plaque support 4₁ de la garniture interne 4 de freinage. Dans cet exemple de réalisation, le réservoir interne 7 est ménagé dans un piston du système de freinage 1. Un premier aimant 8 est disposé dans le réservoir interne 7.

Le système de freinage 1 comporte également un réservoir externe 9 en regard de l'orifice 6 et débouchant sur la plaque support 5₁ de la garniture externe 5 de freinage. Un deuxième aimant 10 est disposé dans le réservoir externe 9.

La face 11 du premier aimant 8 en regard de l'orifice 6 traversant est en relief. Plus particulièrement, dans cet exemple le relief est formé par une surface bombée.

La face 12 du deuxième aimant 10 en regard de l'orifice 6 traversant est en relief. Plus particulièrement, dans cet exemple le relief est formé par une surface bombée.

Dans cet exemple de réalisation, pour des raisons d'encombrement, le deuxième aimant 10 présente une longueur L10 inférieure à la longueur L8 du premier aimant 8.

Dans une réalisation différente non illustrée, le premier aimant 8 et le deuxième aimant 10 peuvent présenter une longueur similaire.

En outre, une zone de stockage périphérique Z8 est ménagée entre la surface interne du réservoir interne 7 et la surface externe du premier aimant 8. Pour positionner et maintenir le premier aimant 8 dans le réservoir interne 7, une entretoise 13 est disposée entre la surface interne du réservoir interne 7 et la surface externe du premier aimant 8.

De plus, une zone de stockage périphérique Z10 est ménagée entre la surface interne du réservoir externe 9 et la surface externe du deuxième aimant 10. Pour maintenir et positionner le deuxième aimant 10 dans le réservoir externe 9, un épaulement est réalisé au fond du réservoir externe 9.

Ainsi, les particules P chargées métalliquement générées lors d'un freinage, sont attirées par les surfaces 11 et 12 du premier aimant 8 et du deuxième aimant 9 en regard des orifices 6. Les particules P traversent donc les orifices 6 pour venir se coller sur les surfaces 11 et 12 du premier aimant 8 et du deuxième aimant 10. Lorsque ces surfaces 11 et 12 sont recouvertes de particules P, les nouvelles particules viennent pousser les particules préalablement déposées vers le fond du réservoir interne 7 ou externe 9.

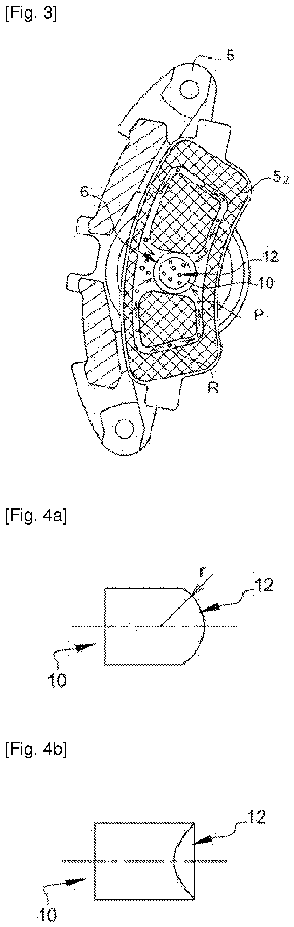

La figure 3 illustre un exemple de réalisation d'une garniture de freinage selon un aspect de l'invention. Plus particulièrement, dans cette réalisation, une rainure R est ménagée dans la couche de friction 5₂ de la garniture externe 5. Dans cet exemple, la rainure R suit la périphérie de la couche de friction 5₂ et débouche en outre dans l'orifice 6 traversant l'épaisseur de la garniture externe 5. Ainsi, certaines des particules P générées lors d'un freinage se dirigent directement vers l'orifice 6 et viennent ensuite se coller sur la surface en relief 12 de l'aimant 10. D'autres particules sont collectées par la rainure R. Les particules collectées par la rainure R sont ensuite attirées par l'aimant 10. Elles se déplacent donc dans la rainure R et passent au travers de l'orifice 6 pour venir se coller sur la surface en relief 12 de l'aimant 10. Les particules ainsi collectées peuvent ensuite être récupérées lors d'une phase de maintenance du véhicule.

Selon un aspect de l'invention, la surface en relief 12 de l'aimant 10 destinée à être positionnée en regard de l'orifice 6 de la garniture externe 5 est bombée.

La figure 4a est une vue de dessous d'un aimant 10 muni d'une telle surface bombée 12 et la figure 4b est une vue de face de cet aimant 10. Le rayon de courbure r de cette surface bombée 12 peut être de l'ordre de 20 mm. Il est entendu que la surface en relief 11 de l'aimant 8 peut également être bombée.

Selon un autre aspect de l'invention, la surface en relief 12 de l'aimant 10 destinée à être positionnée en regard de l'orifice 6 de la garniture externe 5 est chanfreinée.

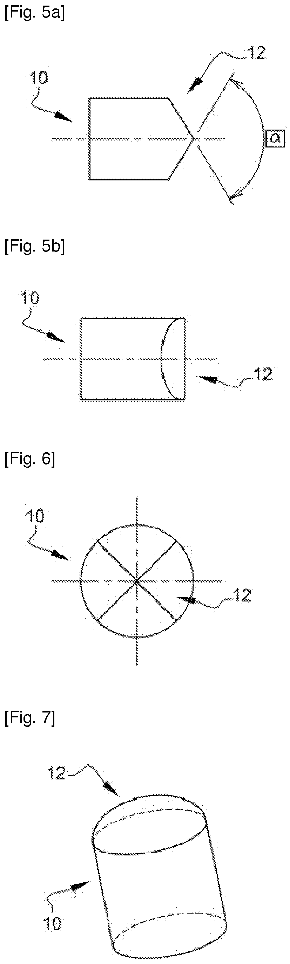

La figure 5a est une vue dessous d'un aimant 10 muni d'une telle surface chanfreinée comportant deux chanfreins et la figure 5b est une vue de face de cet aimant 10. L'angle α entre ces deux chanfreins peut être de l'ordre de 120°. Il est entendu que la surface en relief 11 de l'aimant 8 peut également être chanfreinée.

Dans un autre exemple, la surface en relief 12 de l'aimant 10 destinée à être positionnée en regard de l'orifice 6 de la garniture externe 5 de frein ne comporte pas deux chanfreins mais quatre chanfreins. La figure 6 illustre une vue de dessus de cet aimant 10 dont la surface en relief 12 destinée à être positionnée en regard de l'orifice 6 comporte quatre chanfreins. Il est entendu que la surface en relief 11 de l'aimant 8 peut également comporter quatre chanfreins.

Selon un aspect différent de l'invention illustré à la figure 7, la surface 12 de l'aimant 10 destinée à être positionnée en regard d'un orifice 6 est sphérique. De même la surface en relief 11 de l'aimant 8 peut être sphérique.

## Revendications

1. Système de freinage (1) de véhicule construit et agencé pour collecter des particules émises lors d'un freinage, ledit système de freinage (1) comportant un étrier (3) supportant une garniture interne de freinage (4) et une garniture externe de freinage (5) comportant chacune une plaque support (4₁, 5₁) et une couche de friction (4₂, 5₂), lesdites garnitures interne et externe de freinage (4, 5) comportent un orifice (6) traversant leur épaisseur (E), le système de freinage (1) comportant en outre :
- un réservoir interne (7) en regard dudit orifice (6) de ladite plaque support (4₁) de ladite garniture interne de freinage (4), ledit réservoir interne (7) débouchant sur ladite plaque support (4₁) et comportant un premier aimant (8),
- un réservoir externe (9) en regard dudit orifice (6) de ladite plaque support (5₁) de ladite garniture externe de freinage (5), ledit réservoir externe (9) débouchant sur ladite plaque support (5₁) et comportant un deuxième aimant (10),
- les faces (11, 12) des premier et deuxième aimants (8,10) en regard desdits orifices (6) étant en relief,
**caractérisé en ce qu'**au moins une des faces (11, 12) du premier ou deuxième aimant (8, 10) en regard d'un des orifices (6) est sphérique ou est bombée ou comporte un chanfrein.

2. Système de freinage (1) de véhicule selon la revendication 1, **caractérisé en ce que** le réservoir interne (7) est ménagé dans un piston du système de freinage (1).

3. Système de freinage (1) de véhicule selon l'une quelconque des revendications précédentes, **caractérisé en ce qu'**une zone de stockage périphérique (Z8, Z10) est ménagée entre la surface interne du réservoir interne (7) ou externe (8) et la surface externe du premier aimant (8) ou deuxième aimant (10).

4. Système de freinage (1) de véhicule selon l'une quelconque des revendications précédentes, **caractérisé en ce que** le premier aimant (8) et le deuxième aimant (10) présentent une longueur (L8, L10) différente.

5. Système de freinage (1) de véhicule selon l'une quelconque des revendications précédentes, **caractérisé en ce qu'**une rainure (R) est ménagée dans au moins une des couches de friction (4₂, 5₂), ladite rainure (R) débouchant dans l'orifice (6).

6. Système de freinage (1) de véhicule selon l'une quelconque des revendications précédentes, **caractérisé en ce qu'**au moins un des premier ou deuxième aimants (8, 10) est au néodyme-fer-bore.

7. Véhicule, **caractérisé en ce qu'**il comporte deux systèmes de freinage (1) construits et agencés pour collecter des particules émises lors d'un freinage selon l'une quelconque des revendications précédentes.

## Patentansprüche

1. Fahrzeugbremssystem (1), das konstruiert und angeordnet ist, um Partikel zu sammeln, die bei einer Bremsung emittiert werden, wobei das Bremssystem (1) einen Bremssattel (3) aufweist, der einen Bremsbelag (4) trägt, und einen äußeren Bremsbelag (5), von denen jeder eine Trägerplatte (41, 51) und eine Reibschicht (42, 52) aufweist, wobei der innere und der äußere Bremsbelag (4, 5) eine Öffnung (6) aufweisen, die durch ihre Dicke (E) hindurchgeht, wobei das Bremssystem (1) ferner aufweist:
- einem Innenbehälter (7) gegenüber der Öffnung (6) der Trägerplatte (41) des Bremsbelags (4), wobei der Innenbehälter (7) an der Trägerplatte (41) mündet und einen ersten Magneten (8) aufweist,
- einem äußeren Behälter (9) gegenüber der Öffnung (6) der Trägerplatte (51) des äußeren Bremsbelags (5), wobei der äußere Behälter (9) in die Trägerplatte (51) mündet und einen zweiten Magneten (10) aufweist,
- die den Öffnungen (6) gegenüberliegenden Flächen (11, 12) des ersten und zweiten Magneten (8, 10) erhaben sind,
**dadurch gekennzeichnet, dass** mindestens eine der Flächen (11, 12) des ersten oder zweiten Magneten (8, 10) gegenüber einer der Öffnungen (6) kugelförmig oder gewölbt ist oder eine Fase aufweist.

2. Fahrzeugbremsanlage (1) nach Anspruch 1, **dadurch gekennzeichnet, dass** der Innenbehälter (7) in einem Kolben der Bremsanlage (1) angeordnet ist.

3. Fahrzeugbremsanlage (1) nach einem der vorhergehenden Ansprüche, **dadurch gekennzeichnet, dass** zwischen der Innenfläche des inneren (7) oder äußeren Behälters (8) und der Außenfläche des ersten Magneten (8) oder zweiten Magneten (10) ein umlaufender Lagerbereich (Z8, Z10) vorgesehen ist.

4. Fahrzeugbremsanlage (1) nach einem der vorhergehenden Ansprüche, **dadurch gekennzeichnet, dass** der erste Magnet (8) und der zweite Magnet (10) eine unterschiedliche Länge (L8, L10) aufweisen.

5. Fahrzeugbremssystem (1) nach einem der vorhergehenden Ansprüche, **dadurch gekennzeichnet, dass** in mindestens einer der Reibschichten (42, 52) eine Nut (R) ausgebildet ist, wobei die Nut (R) in die Öffnung (6) mündet.

6. Fahrzeugbremsanlage (1) nach einem der vorhergehenden Ansprüche, **dadurch gekennzeichnet, dass** mindestens einer der ersten oder zweiten Magnete (8, 10) Neodym-Eisen-Bor ist.

7. Fahrzeug, **dadurch gekennzeichnet, dass** es zwei Bremssysteme (1) aufweist, die konstruiert und angeordnet sind, um Partikel zu sammeln, die bei einer Bremsung nach einem der vorhergehenden Ansprüche emittiert werden.

## Claims

1. A vehicle braking system (1) constructed and arranged to collect particles emitted during braking, said braking system (1) comprising a caliper (3) supporting an inner brake lining (4) and an outer brake lining (5) each comprising a support plate (41, 51) and a friction layer (42, 52), said inner and outer brake linings (4, 5) comprising an orifice (6) passing through their thickness (E), the braking system (1) further comprising:
- an internal reservoir (7) facing said orifice (6) of said support plate (41) of said internal brake lining (4), said internal reservoir (7) opening onto said support plate (41) and comprising a first magnet (8),
- an external reservoir (9) facing said orifice (6) of said support plate (51) of said external brake lining (5), said external reservoir (9) opening onto said support plate (51) and comprising a second magnet (10),
- the faces (11, 12) of the first and second magnets (8, 10) facing said orifices (6) being in relief,
**characterized in that** at least one of the faces (11, 12) of the first or second magnet (8, 10) facing one of the orifices (6) is spherical or is convex or has a chamfer.

2. Vehicle braking system (1) according to claim 1, **characterized in that** the internal reservoir (7) is formed in a piston of the braking system (1).

3. Vehicle braking system (1) according to any one of the preceding claims, **characterized in that** a peripheral storage zone (Z8, Z10) is formed between the inner surface of the inner reservoir (7) or outer surface (8) and the outer surface of the first magnet (8) or second magnet (10).

4. Vehicle braking system (1) according to any one of the preceding claims, **characterized in that** the first magnet (8) and the second magnet (10) have a different length (L8, L10).

5. Vehicle braking system (1) according to any one of the preceding claims, **characterized in that** a groove (R) is formed in at least one of the friction layers (42, 52), said groove (R) opening into the orifice (6).

6. Vehicle braking system (1) according to any one of the preceding claims, **characterized in that** at least one of the first or second magnets (8, 10) is made of neodymium-iron-boron.

7. Vehicle, **characterized in that** it comprises two braking systems (1) constructed and arranged to collect particles emitted during braking according to any one of the preceding claims.
